# EUROPEAN PATENT SPECIFICATION

(11) **EP 0 612 699 B1**
(45) Date of publication and mention of the grant of the patent: **03.05.2000**
(21) Application number: 94102616.3
(22) Date of filing: 22.02.1994
(51) Int. Cl.: C03B 9/38, C03B 9/353, C03B 9/16

(54) **Mold cooling apparatus for a glassware forming machine**
Matrizkühlvorrichtung für eine Maschine zum Herstellen von Glasgegenstände
Appareil de refroidissement de moule pour une machine de fabrication d'objets en verre

(30) Priority: 25.02.1993 US 22239
(43) Date of publication of application: 31.08.1994
(73) Proprietor: OWENS-BROCKWAY GLASS CONTAINER INC., Toledo, Ohio 43666 (US)
(72) Inventor: Kirkman, Richard T., Maumee, OH 43537 (US); Hayes, Daniel M., Perrysburg, OH 43551 (US); Stanifer, Richard L., Monroe, MI 48161 (US)
(74) Representative: Blumbach, Kramer & Partner GbR

(56) References cited:
- DE-B- 1 205 235
- GB-A- 2 256 868
- US-A- 3 586 491
- US-A- 3 888 647

## Description

This invention relates to mold supporting and cooling apparatus according to the preamble of claim 1 and to a method of cooling a mold in an apparatus for a glass forming machine particularly to apparatus for cooling multiple cavity molds.

It has long been known that various arrangements can be provided for cooling either single or multiple cavity molds as shown, for example in US-patents 3 027 685, 3 094 404, 3 133 807, 3 137 560, 3 536 469, 3 586 491, 3 888 647, 4 067 711, 4 070 174, 4 388 099 and 4 668 269.

Conventional I.S. type of glass ware forming machines have a plurality of independent sections operated in timed relationship to one another. Gobs of molten glass are delivered from a glass feeding mechanism to upwardly open blank molds where parisons are formed which are thereafter inverted to deliver the formed parisons into blow molds for final forming. Such machines are shown, for example, in US-patent 1 911 119.

The blank and blow molds comprise complementary mold halves which define the cavities. Where the molds are in a multiple cavity configuration, supplement cooling is required from a secondary source of compressed air. The conventional or heretofore standard method for cooling I.S. machine mold equipment has been with low pressure cooling wind from a stationary distribution point directing the wind to the external surfaces of the mold equipment. The conventional cooling is limited by the changing position of the mold equipment during the glassware forming process and directional interference from the mold arms used to support the mold equipment which are between the stationary wind distributor parts and the mold equipment.

An apparatus referred-to above is known from US-A-3 586 491. Here, the cooling wind is conducted through the mold arms to a central annular section around the mold where the mold arms grip and support the mold. Between diffuser plate and mold halves extends a space which is open at the upper and lower ends of the mold halves. It is difficult to deliver cooling air from a further source to such configuration of the space.

Vertically exending cooling channels through the walls of a mold are already known (US-A-4,388,099). With such construction, any additional cooling cannot be provided, nor differential cooling between central and end sections of the mold.

It is already known from GB-A-2 256 868 to connect vertically extending cooling passages to a distributing passage midway between top and bottom of the mold and blow air therethrough. Here, the cooling effect is evenly distributed along the mold, whereas with some kind of articles, more cooling of the central portion thereof is desirable.

Among the objectives of the present invention are to provide an apparatus for cooling multiple cavity molds for I.S. machines wherein the cooling is achieved by minimal modification or replacement of the mold support arms, and which can be adapted to existing machines and molds.

The invention is defined in claims 1 and 5.

In accordance with a preferred embodiment of the invention, a mold supporting and cooling apparatus comprises a pair of complementary mold arms, each arm supporting mold halves such that when the arms are moved towards one another, the molds halves form plural cavities. Each mold arm supports a first air chamber to which air under pressure is supplied and a second air chamber communicating with the first chamber and having an opening and a space facing each mold half. A diffuser plate closes each second chamber and is positioned in close proximity with its respective mold half. The diffuser plate has openings for directing air from the second chamber against the mold half. Each mold half has axial exhaust openings extending from the space between the mold half and the exterior. The mold cooling apparatus can be applied to individual cavity as well as multi-cavity mold equipment. When a multi-cavity configuration is used, supplemental cooling is utilized through introduction of compressed air from a secondary source to axial and interconnected passages within the mold halves.

### Description of the Drawings

FIG. 1 is a side elevational view of a mold cooling apparatus embodying the invention.
FIG. 2 is a plan view of the apparatus, the molds being removed.
FIG. 3 is a part plan view showing the mold cooling apparatus with the multi-cavity molds, including the supplemental cooling supply device.
FIG. 4 is a sectional view of the mold cooling apparatus and a mold through the center of a mold cavity.

### Description

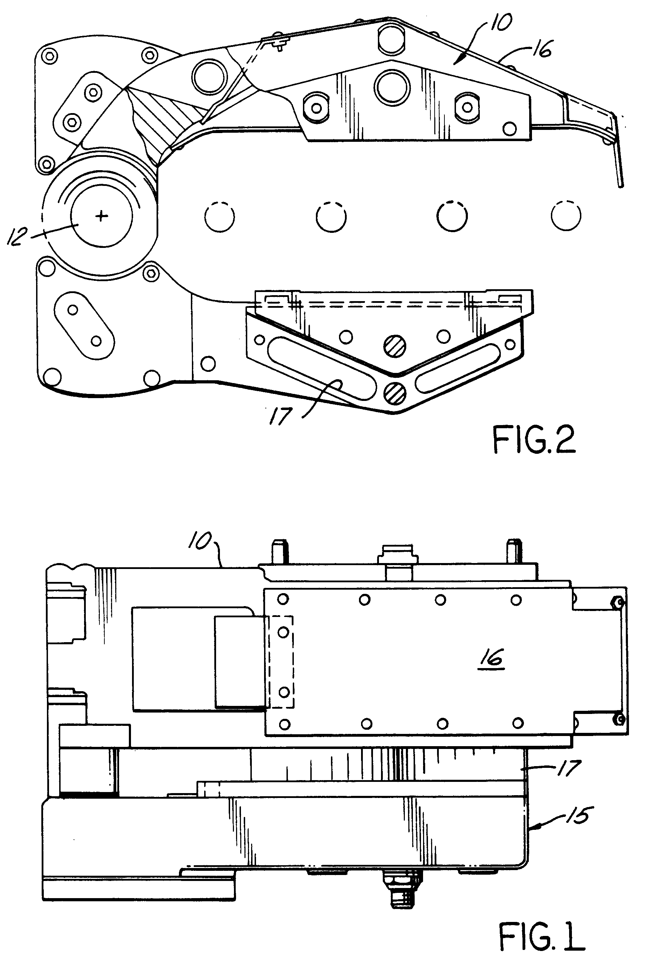

Referring to FIGS. 1-3, there is shown a portion of an I.S. machine wherein mold support arms 10 which are mirror or complementary of one another are hinged at a post 12 and operated for movement toward and away from one another to bring mold halves 13 mounted thereon toward and away from one another to define multiple mold cavities. The apparatus for moving the mold support arms 10 toward and away from one another is old and well known in the art.

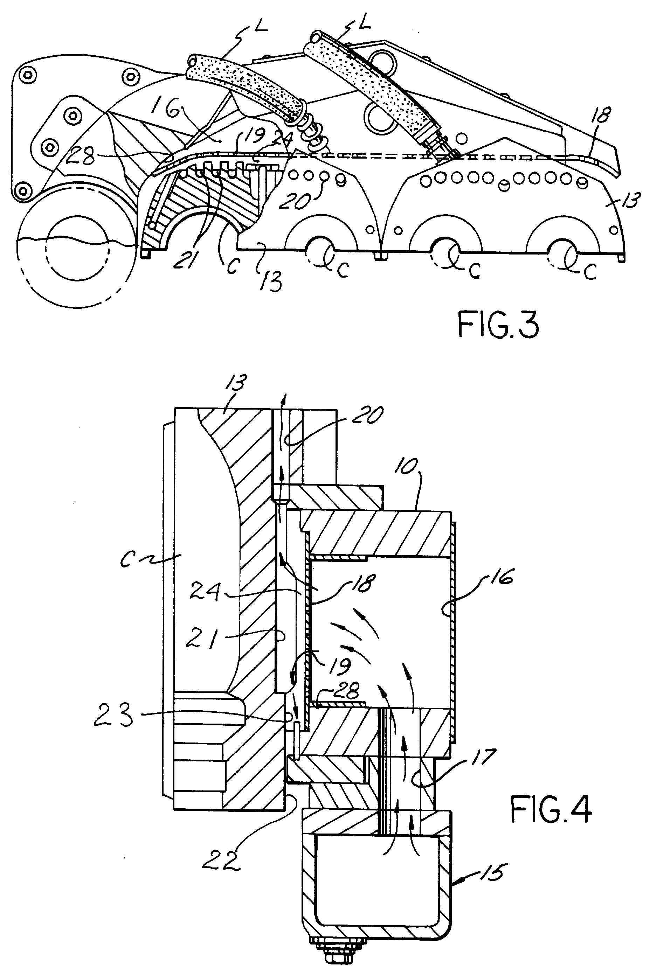

Referring to FIG. 4, each mold support arm 10 has mounted thereon a first chamber 15 to which air or other cooling fluid under pressure is provided from a source, a second chamber 16 that communicates with the first chamber by a passage 17. The chamber 16 has one wall thereof defined by a diffuser plate 18 that has a plurality of longitudinally and transversely spaced openings 19 through which the air from the chamber 16 flows radially toward the mold 13 and thereafter axially outwardly through axial opening 20 provided in circumferentially spaced relation with each of the cavities C of the molds. The flow of cooling fluid is as indicated by arrows in FIG. 4.

As shown in FIG. 3, the molds preferably are provided with vertical grooves 21 on the surface thereof facing the diffuser plate 18 and at least some of the axial openings 20 are vertically aligned with the grooves 21. The openings 19 are spaced to have cooling media flow into the grooves 21 at the mold surface.

In the multi-cavity mold form additional cooling, via compressed air, can be provided through lines L to the axial and interconnecting passages from a secondary source to the multi-cavity mold halves. This cooling is used primarily to cool the seam or external edge portions of the cavity C.

As shown in Fig. 4, the specific structure for mounting and forming the chambers comprises the mold arm(s) 10 supporting a first chamber 15 that supplied pressurized air that is ported through passageway(s) 17 to a second chamber 16. The second chamber 16 is formed by enclosing the arm or installing a separate enclosure within the arm(s). The second chamber has an opening 28 facing and in close proximity of the external surface 23 of the mold(s) 13. The opening 28 of the second chamber is covered with a diffuser plate 18 having a plurality of openings 19 directing the exhausting air in a space 24 towards the external mold surface 23. The application of air remains substantially uniform to the mold surface 23 throughout the glass ware forming cycle. The mold(s) 13 are configured with grooves 21 at the external surface into which the diffuser plate opening(s) 19 direct the cooling wind. The cooling wind flows through the mold surface grooves 21 to exhaust openings 20 in the top of the mold 13 as well as free areas 22 at the lower area of the mold.

When multi-cavity molds are used supplemental cooling is supplied from a secondary source through flexible ducting L to the mold halves. This air is ported down through the center portion between cavities C near the front face and then directed to the outer seam face areas to exhaust to atmosphere. The diffuse plate 18 and openings 19 are configured to provide substantially uniform cooling to all cavities C operating.

## Claims

1. A mold supporting and cooling apparatus for use in a glass forming machine comprising
a pair of mold halves (13), which, when brought together, form at least one mold cavity (C) wherein an article having an axial length can be formed, the apparatus comprising a pair of complementary mold arms (10), which support
a respective adjacent mold half (13) and can be moved toward one another to bring the mold halves (13) together;
each mold arm (10) including a first air chamber (15), to which air under pressure is supplied, and
a second air chamber (16) communicating with the first chamber (15) and having a first opening (28) facing said respective adjacent mold half (13);
a diffuser plate (18) closing said opening (28) of said second chamber (16) and positioned in spaced relationship in close proximity with the respective adjacent mold half (13), the diffuser plate (18) having second openings (19) for directing air from the second chamber (16) against the respective adjacent mold half (13),
said first opening (28) merging into a space (24) which extends along the diffuser plate (18) and the external mold surface (23) ;
characterized in that
said space (24) is a relatively closed space,
in that each mold half (13) has a plurality of axial exhaust openings (20) extending from said space (24) between the mold half (13) and the diffuser plate (18) to the exterior of the mold; and
in that said space (24) and said exhaust openings (20) together have an axial length which corresponds to substantially the axial length of the mold half cavity (C).

2. The mold supporting and cooling apparatus of claim 1 wherein said mold has vertical grooves (21) extending along said space (24), at least some of said exhaust openings (20) being aligned with said grooves (21), and has free areas (22) on said external mold surface (23) at the lower area thereof, which is arranged to receive some cooling wind from said space (24).

3. The mold supporting and cooling apparatus set forth in claim 1 or 2 wherein each said arm (10) supports plural mold halves (13) such that when the arms are moved toward one another, said mold halves (13) form plural cavities (C), said diffuser plate (18) extending along said arm (10) such that air is directed from said second chamber (16) against each said mold half (13) on said arm (10).

4. The mold supporting and cooling apparatus set forth in claim 3 wherein further passages for supplying supplemental cooling air from a secondary source (L) into said space (24) to each said mold half (13) with multiple cavities (C) are provided.

5. A method of cooling a mold in a glass forming machine comprising
a pair of mold halves (13), which, when brought together, form at least one mold cavity (C) wherein an article having an axial length can be formed;
a pair of complementary mold arms (10), which support a respective adjacent mold half (13) and can be moved toward one another to bring the mold halves (13) together;
each mold arm (10) including a first air chamber (15), to which air under pressure is supplied, and
a second air chamber (16) communicating with the first chamber (15) and having a first opening (28) facing said respective adjacent mold half (13);
a diffuser plate (18) closing said opening (28) of said second chamber (16) and positioned in spaced relationship in close proximity with the respective adjacent mold half (13), the diffuser plate (18) having second openings (19) for directing air from the second chamber (16) against the respective adjacent mold half (13),
said first chamber opening (28) merging into a space (24) which extends along the external mold surface (23) and the diffuser plate (18),
characterized in that
cooling wind is directed from said first chamber opening (28) into said space (24) between the diffuser plate (18) and the mold half which is a relative closed space (24) and flowed through a plurality of axial exhaust openings (20) on each mold half (13) extending from the space (24) to the exterior of the mold, so that substantially the entire axial length of the mold half cavity (C) is cooled.

6. The method of claim 5 wherein some cooling wind is flowing from said space (24) to free areas (22) at the lower area of the mold.

7. The method set forth in claim 5 or 6 for apparatus with plural mold halves (13) and with each a diffuser plate (18) extending along an adjacent arm (10), wherein air is directed from said second chamber (16) against each said mold half (13) on said arm (10).

8. The method of claim 7 wherein supplemental cooling air from a secondary source (L) is supplied into said space (24) to said mold halves (13) having multiple cavities (C).

## Patentansprüche

1. Vorrichtung zur Stützung und Kühlung von Gießformen für den Einsatz in einer Maschine zum Herstellen von Glasgegenständen, mit zwei Gießformhälften (13), die, wenn sie zusammengebracht werden, wenigstens eine Gießkammer (C) bilden, in der ein Gegenstand mit einer axialen Länge gebildet werden kann, wobei die Vorrichtung folgende Merkmale umfaßt:
zwei komplementäre Gießformarme (10) halten die jeweils eine benachbarte Gießformhälfte (13) und können zueinander bewegt werden, um die Gießformhälften (13) zusammenzubringen;
jeder Gießformarm (10) umfaßt eine erste Luftkammer (15), in die Druckluft zugeführt wird;
eine zweite Luftkammer (16) steht mit der ersten Kammer (15) in Verbindung und weist eine erste Öffnung (28) auf, die der jeweiligen benachbarten Gießformhälfte (13) gegenübersteht;
eine Diffuserplatte (18) verschließt die Öffnung (28) der zweiten Kammer (16) und ist in einem Abstand dicht an der jeweiligen benachbarten Gießformhälfte (13) angeordnet, wobei die Diffuserplatte (18) zweite Öffnungen (19) aufweist, um Luft von der zweiten Kammer (16) gegen die entsprechende benachbarte Gießformhälfte (13) zu richten,
die erste Öffnung (28) geht in einen Raum (24) über, der sich entlang der Diffuserplatte (18) und der Außenwand (23) der Gießform erstreckt;
dadurch gekennzeichnet,
daß der Raum (24) einen relativ geschlossener Raum darstellt,
daß jede Gießformhälfte (13) eine Vielzahl von axialen Auslaßöffnungen (20) aufweist, die sich von dem Raum (24) zwischen die Gießformhälfte (13) und die Diffuserplatte (18) zur Außenseite der Form erstrecken; und
daß der Raum (24) und die Auslaßöffnungen (20) zusammen eine axiale Länge aufweisen, die im wesentlichen der axialen Länge der Kammer (C) der Gießformhälfte entspricht.

2. Vorrichtung zur Stützung und Kühlung von Gießformen nach Anspruch 1, dadurch gekennzeichnet, daß die Form vertikale Nuten aufweist, die sich entlang des Raums (24) erstrecken, wobei wenigstens einige der Auslaßöffnungen (20) mit den Nuten (21) ausgerichtet sind und die Gießform freie Flächen (22) an der Außenseite der Form (23) an deren unteren Bereich aufweist, die zum Empfang von etwas Kühlstrom aus dem Raum (24) angeordnet ist.

3. Vorrichtung zur Stützung und Kühlung von Gießformen nach Anspruch 1 oder 2, dadurch gekennzeichnet, daß jeder Arm (10) eine Vielzahl von Gießformhälften (13) trägt, so daß wenn die Arme zueinander bewegt werden, die Gießformhälften (13) eine Vielzahl von Kammern (C) bilden, und daß die Diffuserplatte (18) sich entlang des Arms (10) derart erstreckt, daß Luft von der zweiten Kammer (16) gegen jede, am Arm (10) befindliche Gießformhälfte (13) gerichtet ist.

4. Vorrichtung zur Stützung und Kühlung von Gießformen nach Anspruch 3, dadurch gekennzeichnet, daß weitere Kanäle zum Zuführen von zusätzlicher Kühlungsluft von einer zweiten Quelle (L) in den Raum (24) zu jeder Gießformhälfte (13) mit Mehrfachkammern (C) bereitgestellt werden.

5. Verfahren zum Kühlen einer Gießform für eine Maschine zum Herstellen von Glasgegenständen, mit folgenden Schritten:
zwei Gießformhälften (13), welche, wenn sie zusammengebracht werden, wenigstens eine Gießkammer (C) bilden, in der ein Gegenstand mit einer axialen Länge geformt werden kann;
zwei komplementäre Gießformarme (10), welche eine entsprechende benachbarte Gießformhälfte (13) tragen, können zueinander bewegt werden, um die Gießformhälften (13) zusammenzubringen;
jeder Gießformarm (10) umfaßt eine erste Luftkammer (15), in die Druckluft zugeführt wird;
eine zweite Luftkammer (16) steht mit der ersten Kammer (15) in Verbindung und weist eine erste Öffnung (28) auf, die der jeweiligen benachbarten Gießformhälfte (13) gegenübersteht;
eine Diffuserplatte (18) verschließt die Öffnung (28) der zweiten Kammer (16) und ist in einem Abstand dicht an der jeweiligen benachbarten Gießformhälfte (13) angeordnet, wobei die Diffuserplatte (18) zweite Öffnungen (19) aufweist, um Luft von der zweiten Kammer (16) gegen die entsprechende benachbarte Gießformhälfte (13) zu richten,
die erste Kammeröffnung (28) geht in einen Raum (24) über, der sich entlang der Diffuserplatte (18) und der Außenwand (23) der Form erstreckt;
dadurch gekennzeichnet, daß
Kühlluft von der ersten Kammeröffnung (28) in den Raum (24) zwischen die Diffuserplatte (18) und die relativ dicht zum Raum (24) liegende Gießformhälfte gerichtet wird und durch eine Vielzahl von axialen Auslaßöffnungen (20) an jeder Gießformhälfte (13) fließen lassen wird, die sich vom Raum zur Außenseite der Gießform erstrecken, so daß im wesentlichen die gesamte axiale Länge der Kammer (C) der Gießformhälften gekühlt wird.

6. Verfahren nach Anspruch 5, dadurch gekennzeichnet, daß etwas Kühlluft vom Raum (24) zu den freien Flächen (22) am unteren Bereich der Gießform fließt.

7. Verfahren nach Anspruch 5 oder 6 für die Vorrichtung mit einer Vielzahl von Gießformhälften (13) und mit jeweils einer Diffuserplatte (18), die sich entlang des benachbarten Arms (10) erstreckt, wobei die Luft von der zweiten Kammer (16) gegen jede, am Arm (10) befindliche Gießformhälfte (13) gerichtet wird.

8. Verfahren nach Anspruch 7, dadurch gekennzeichnet, daß zusätzliche Kühlungsluft von einer zweiten Quelle (L) in den Raum (24) zu den Gießformhälften (13) mit Mehrfachkammern (C) geführt wird.

## Revendications

1. Appareil de support et de refroidissement de moule pour machine de fabrication d'objets en verte comprenant :
une paire de moitiés de moule (13) qui, réunies, forment au moins une cavité (C) de moule dans laquelle peut être formé un article présentant une longueur axiale, l'appareil comprenant une paire de bras de moule complémentaires (10) qui supportent une moitié de moule (13) respective adjacente et que l'on peut déplacer l'un vers l'autre pour réunir les moitiés de moule (13);
chaque bras de moule (10) comportant une première chambre d'air (15), à laquelle on envoie de l'air sous pression, et
une deuxième chambre d'air (16) communiquant avec la première chambre (15) et comportant une première ouverture (28) faisant face à ladite moitié de moule (13) respective adjacente;
un diffuseur (18) sous forme de plaque fermant ladite ouverture (28) de ladite deuxième chambre (16) et positionné en relation espacée, mais à proximité rapprochée, de la moitié de moule (13) respective adjacente, le diffuseur (18) comportant des secondes ouvertures (19) pour diriger l'air provenant de la deuxième chambre (16) contre la moitié de moule (13) respective adjacente,
ladite première ouverture (28) débouchant dans un espace (24) qui s'étend le long du diffuseur (18) et de la surface de moule externe (23);
caractérisé en ce que
ledit espace (24) est un espace relativement clos,
en ce que chaque moitié de moule (13) comporte une pluralité d'ouvertures d'échappement axiales (20) s'étendant depuis ledit espace (24) entre la moitié de moule (13) et le diffuseur (18) jusqu'à l'extérieur du moule; et
en ce que ledit espace (24) et lesdites ouvertures d'échappement (20) ont ensemble une longueur axiale qui correspond sensiblement à la longueur axiale de la cavité (C) de moitié de moule.

2. Appareil de support et de refroidissement de moule selon la revendication 1, dans lequel ledit moule comporte des rainures verticales (21) qui s'étendent le long dudit espace (24), une partie au moins desdites ouvertures d'échappement (20) étant alignées avec lesdites rainures (21), et comporte des zones libres (22) sur ladite surface de moule externe (23) dans sa partie inférieure, qui est agencée pour recevoir un courant d'air de refroidissement provenant dudit espace (24).

3. Appareil de support et de refroidissement de moule selon la revendication 1 ou 2, dans lequel chacun desdits bras (10) supporte plusieurs moitiés de moules (13) si bien que lorsque l'on déplace les bras l'un vers l'autre, lesdites moitiés de moules (13) forment plusieurs cavités (C), ledit diffuseur (18) s'étendant le long dudit bras (10) de sorte que de l'air est dirigé depuis ladite deuxième chambre (16) contre chacune desdites moitiés de moules (13) sur ledit bras (10).

4. Appareil de support et de refroidissement de moule selon la revendication 3, dans lequel sont prévus des passages supplémentaires pour envoyer de l'air de refroidissement supplémentaire provenant d'une source secondaire (L) dans ledit espace (24) jusqu'à chacune desdites moitiés de moule (13) avec plusieurs cavités (C).

5. Procédé de refroidissement d'un moule de machine de fabrication d'objets en verre comprenant :
une paire de moitiés de moule (13) qui, mises ensemble, forment au moins une cavité (C) de moule dans laquelle un article présentant une longueur axiale peut être formé;
une paire de bras de moule complémentaires (10), qui supportent une moitié de moule (13) respective adjacente et que l'on peut déplacer l'un vers l'autre pour réunir les moitiés de moule (13);
chaque bras de moule (10) comportant une première chambre d'air (15), à laquelle on envoie de l'air sous pression, et
une deuxième chambre d'air (16) communiquant avec la première chambre (15) et comportant une première ouverture (28) faisant face à ladite moitié de moule (13) respective adjacente;
un diffuseur (18) sous forme de plaque fermant ladite ouverture (28) de ladite deuxième chambre (16) et positionné en relation espacée, mais à proximité rapprochée, de la moitié de moule (13) respective adjacente, le diffuseur (18) comportant des secondes ouvertures (19) pour diriger l'air provenant de la deuxième chambre (16) contre la moitié de moule (13) respective adjacente,
ladite première ouverture (28) de chambre débouchant dans un espace (24) qui s'étend le long de la surface de moule externe (23) et du diffuseur (18),
caractérisé en ce que
on dirige un courant d'air de refroidissement provenant de ladite première ouverture (28) de chambre dans ledit espace (24) entre le diffuseur (18) et la moitié de moule qui est un espace relativement clos (24) et on le fait s'écouler à travers une pluralité d'ouvertures d'échappement axiales (20) sur chaque moitié de moule (13) s'étendant depuis l'espace (24) jusqu'à l'extérieur du moule, de sorte que substantiellement la longueur axiale entière de la cavité (C) de moitié de moule est refroidie.

6. Procédé selon la revendication 5, dans lequel une partie du courant d'air de refroidissement s'écoule depuis ledit espace (24) jusqu'aux zones libres (22) dans la partie inférieure du moule.

7. Procédé selon la revendication 5 ou 6 pour appareil comportant plusieurs moitiés de moules (13) et avec un diffuseur (18) pour chacune qui s'étend le long d'un bras (10) adjacent, dans lequel l'air est dirigé depuis ladite deuxième chambre (16) contre chacune desdites moitiés de moules (13) sur ledit bras (10).

8. Procédé selon la revendication 7, dans lequel de l'air de refroidissement supplémentaire provenant d'une source secondaire (L) est envoyé dans ledit espace (24) jusqu'auxdites moitiés de moules (13) comportant plusieurs cavités (C).
